# EUROPÄISCHE PATENTANMELDUNG

(11) **EP 1 213 237 A2**
(43) Veröffentlichungstag der Anmeldung: **12.06.2002**
(21) Anmeldenummer: 01128445.2
(22) Anmeldetag: 05.12.2001
(51) Int. Cl.: B65G 1/07

(54) **Hubroller**

(30) Priorität: 05.12.2000 DE 10060366
(71) Anmelder: Weigert, Franz, 93161 Sinzing (DE); Simmeth, Albert, 93194 Walderbach (DE)
(72) Erfinder: Weigert, Franz, 93161 Sinzing (DE); Simmeth, Albert, 93194 Walderbach (DE)
(74) Vertreter: Beetz & Partner Patentanwälte

(57) **Zusammenfassung**

Die Erfindung betrifft eine Vorrichtung zur Aufnahme von Gegenständen, insbesondere mit im wesentlichen gleichen Abmessungen und gleichem Gewicht, mit einer Arbeitsplatte (1;11), einem auf dem Boden aufstehenden Grundgestell (3;13) und mindestens einem vertikalen Verstellteil (2;12) zur Höhenregulierung der Arbeitsplatte (1;11), das die Arbeitsplatte (1;11) und das Grundgestell (3;13) miteinander verbindet, wobei eine Höhe H einer Oberkante von auf der Arbeitsplatte (1;11) abgelegten Gegenständen (6,7;15) im wesentlichen unabhängig von einer Anzahl der auf der Arbeitsplatte (1;11) abgelegten Gegenstände (6,7;15) ist, und die Höhenregulierung der Arbeitsplatte (1,11) in Stufen mit einer Höhe erfolgt, die im wesentlichen einer Höhe G der ablegbaren Gegenstände (6,7;15) entspricht.

## Beschreibung

Die Erfindung betrifft einen Hubroller bzw. eine sich in der Höhe verstellende Aufnahme für Gegenstände und ein Verfahren zur Höhenverstellung.

Im privaten und gewerblichen Bereich werden Arbeitsplatten oder Arbeitsplattformen zur Ablage von Gegenständen genutzt. Bei der industriellen Montage von Bauteilen dienen sie der vorübergehenden Ablage der zu montierenden Bauteile.

In der Lager- oder Buchhaltung werden fahrbare Arbeitsplatten oder -plattformen zum Transport von beispielsweise Akten oder einzulagernden Gegenständen verwendet. Oftmals sollen eine Vielzahl solcher Gegenstände auf einmal zu ihrem jeweiligen Bestimmungsorten transportiert werden. Durch das Beladen der befahrbaren oder standfesten Arbeitsplatten mit einer Vielzahl von Gegenständen verändert sich jedoch die Arbeitshöhe für die mit der Handhabung der Gegenstände beschäftigten Person. Beispielsweise sind bei einer Vielzahl von gestapelten Büchern oder Kisten die zuletzt oben abgelegten Gegenstände für die damit arbeitende Person nur schwer zugänglich. Dieses Problem läßt sich durch eine Verringerung der Höhe der Arbeitsplatte über dem Boden nur insoweit lösen, als daß die Person für einen Zugriff auf die unteren Gegenstände sich bücken oder in die Hocke gehen muß. Ein solches Verhalten ist jedoch aus ergonomischer Sicht insbesondere beim Umgang mit schweren Gegenständen zu vermeiden.

Eine teilweise Lösung dieses Problems wird durch eine höhenverstellbare Arbeitsplatte erreicht, indem die Arbeitshöhe, d.h. die Oberkante der abgelegten Gegenstände, in einem ergonomisch günstigen Bereich eingestellt werden kann. Höhenverstellbare Arbeitsplatten sind seit langem auf dem Markt bekannt. Die Höhenverstellung kann beispielsweise durch einen Arretiermechanismus, ausziehbare oder herausdrehbare Beine und anderes erfolgen. Die deutsche Offenlegungsschrift DE 100 17 636 beschreibt beispielsweise einen höhenverstellbaren Tisch mit einem relativ großen Verstellbereich, der nach Lösen einer Verriegelung selbständig ausfährt.

Die Höhe der Arbeitsplatte über dem Boden kann zwar bei allen diesen Konstruktionen voreingestellt werden, die Arbeitshöhe ändert sich aber während des Be- und Entladens der Arbeitsplatte durch Ablegen und Wegnehmen von Gegenständen weiterhin dauernd: Die an der Arbeitsplatte tätige Person muß die Höhe der Arbeitsplatte gemäß dem Beladungszustand dauernd eigenhändig nachstellen, um eine konstante Arbeitshöhe zu erzielen. Speziell bei Tätigkeiten, bei denen eine Vielzahl von Gegenständen in kurzer Zeit gehandhabt werden muß, ist dies oftmals nicht möglich.

Die Aufgabe der vorliegenden Erfindung ist es, eine Vorrichtung und ein Verfahren zur Höhenregulierung von Arbeitsplatten zu schaffen, bei der die Arbeitshöhe unabhängig von der Anzahl der auf der Arbeitsplatte abgelegten Gegenstände ist.

Diese Aufgabe wird durch die Merkmale der unabhängigen Patentansprüche gelöst. Die abhängigen Patentansprüche zeigen vorteilhafte Ausführungsformen und Weiterentwicklungen der Erfindung auf.

Die Aufgabe der vorliegenden Erfindung wird durch eine Vorrichtung zur Aufnahme von Gegenständen mit einer Arbeitsplatte, einem Grundgestell und mindestens einem Verstellteil zur Höhenregulierung, das die Arbeitsplatte und das Grundgestell miteinander verbindet, gelöst.

Die ablegbaren Gegenstände können auf der Arbeitsplatte abgelegt und wieder entfernt werden. Die Gegenstände können im wesentlichen die gleichen Abmessungen und das gleiche Gewicht aufweisen und/oder stapelbar sein. Beispielsweise können Behälter, Schachteln oder Kisten mit und ohne Inhalt, Bücher oder Akten auf der Arbeitsplatte abgelegt werden.

Ein vertikales Verstellteil reguliert die Höhe der Arbeitsplatte und verbindet die Arbeitsplatte und das auf dem Boden aufstehende Grundgestell miteinander. Es ist möglich, ein oder mehrere vertikale Verstellteile zwischen Arbeitsplatte und Grundgestell vorzusehen. Beispielsweise kann ein vertikales Verstellteil in der Mitte oder am Rand der Arbeitsplatte angebracht sein oder es können vier vertikale Verstellteile an den vier Ecken auf der Unterseite einer rechteckigen Arbeitsplatte, ähnlich wie Tischbeine, vorgesehen sein.

Die Arbeitshöhe, die der Höhe der Oberkante der unbeladenen Arbeitsplatte über dem Boden und der Höhe der Oberkante aller auf der Arbeitsplatte abgelegten Gegenstände über dem Boden entspricht, ist im wesentlichen unabhängig von der Anzahl der auf der Arbeitsplatte abgelegten Gegenstände. Die Arbeitshöhe für die mit dem Be- und Entladen der Arbeitsplatte betrauten Person, ist für alle Beladungszustände der Arbeitsplatte im wesentlichen gleich, was insbesondere von Vorteil für Personen ist, die Tätigkeiten an oder mit den dort abgelegten Gegenständen, beispielsweise Montagetätigkeiten durchführen. Sowohl die leere unbeladene Arbeitsplatte als auch der zuoberst abgelegte Gegenstand einer beladenen Arbeitsplatte befinden sich auf gleicher Höhe über dem Boden und können einfach erreicht werden. Die Arbeitshöhe wird nach ergonomischen Gesichtspunkten für die auszuführenden Tätigkeiten festgelegt und wird von der Höhenregulierung der Arbeitsplatte konstant gehalten, ohne daß es dazu eines manuellen Eingriffs durch die arbeitende Person bedarf. Die Arbeiten können sowohl im Stehen als auch im Sitzen durchgeführt werden.

Erfindungsgemäß erfolgt die Höhenregulierung der Arbeitsplatte in Stufen mit einer Höhe, die im wesentlichen der Höhe der ablegbaren Gegenstände entspricht.

Ein Verstellteil kann eine Anordnung einer vorbestimmten Anzahl von Federelementen in Reihe aufweisen. Unter Federelemente sind alle Körper zu verstehen, die durch Druck oder Zugwirkung ihre Form, insbesondere ihre Länge, ändern. Insbesondere erfolgt die Längenänderung innerhalb der Elastizitätsgrenze in Abhängigkeit von der auf das Federelement wirkenden Kraft. Dieser Zusammenhang wird durch die Richtgröße oder Federkonstante des Federelements beschrieben. Bei gleicher Krafteinwirkung weist ein Federelement mit einem größeren Richtwert eine kleinere Längenänderung als ein Federelement mit einem kleinerem Richtwert auf.

Bei Einwirken einer bestimmten Kraft, im folgenden als Maximalkraft bezeichnet, auf das Federelement erfolgt eine maximale Längenänderung, auch maximaler Federweg genannt. Die Länge eines Federelements mit maximaler Längenänderung wird als Restlänge bezeichnet. Eine Erhöhung der einwirkenden Kraft auf das Federelement über die Maximalkraft hinaus, führt zu keiner weiteren Längenänderung des Federelements.

Ein Verstellteil kann eine Anordnung von Federelementen in Reihe aufweisen, die durch ihre Längenänderung die Höhe des Verstellteils verändern. Die Höhe des Verstellteils kann sich durch die Summe der Längenänderung der Federelemente verändern. Die Federelemente können in einer Reihe angeordnet sein, d.h. ein Ende eines Federelements ist wechselseitig mit einem anderen Ende eines anderen Federelements fest verbunden.

Die Anzahl der Federelemente, die ein Verstellteil aufweist, kann der Anzahl der Stufen der Höhenregulierung der Arbeitsplatte entsprechen.

Die in Reihe angeordneten Federelemente eines Verstellteils können jeweils eine unterschiedliche Richtgröße oder Federkonstante aufweisen. Eine auf das Verstellteil wirkende Kraft, beispielsweise die Gewichtskraft der Arbeitsplatte und der abgelegten Gegenstände, wirkt auf alle in Reihe angeordneten Federelemente gleich und führt durch die unterschiedlichen Richtgrößen oder Federkonstanten zu unterschiedlichen Längenänderungen der jeweiligen Federelemente. Die Längenänderungen der Federelemente mit einer großen Richtgröße oder Federkonstante sind kleiner als die Längenänderungen der Federelemente mit einer kleinen Richtgröße oder Federkonstante.

Die Längenänderung des Verstellteils kann der Summe der Längenänderungen der Federelemente entsprechen. Diese wird im wesentlichen von der Längenänderung der Federelemente mit kleiner Richtgröße oder Federkonstante bestimmt, solange diese Federelemente nicht vollständig ein- oder ausgefedert sind, d.h. die auf das Verstellteil wirkende Kraft kleiner die Maximalkraft der Federelemente mit kleiner Richtgröße ist.

Vorteilhafterweise entspricht die maximale Längenänderung der einzelnen Federelemente ungefähr der Höhe eines der ablegbaren Gegenstände, die alle im wesentlichen gleiche Abmessungen und ein gleiches Gewicht aufweisen. Beispielsweise führt das vollständige Ein- oder Ausfedern eines Federelements zu einer Änderung der Höhe der Arbeitsplatte über dem Boden, die der Höhe eines ablegbaren Gegenstandes entspricht.

Die Richtgrößen oder Federkonstanten der einzelnen Federelemente können so ausgelegt sein, daß bei Ablage eines Gegenstands die maximale Längenänderung eines Federelements, bei Ablage von zwei Gegenständen die maximale Längenänderung von zwei Federelementen usw. erreicht wird. Bei Ablage von jeweils einem Gegenstand wird so jeweils ein Federelement ein- oder ausgefedert und bei Ablage von einem weiteren Gegenstand wird ein anderes Federelement zusätzlich vollständig ein- oder ausgefedert. Dies wird beispielsweise erreicht, indem die Maximalkraft des ersten Federelements der Gewichtskraft der Arbeitsplatte und eines Gegenstandes entspricht, die Maximalkraft des zweiten Federelements der Gewichtskraft der Arbeitsplatte und zweier Gegenständen entspricht usw. Die Reihenfolge der Anordnung der Federelemente kann dabei beliebig erfolgen. Beim Ablegen eines neuen Gegenstandes auf der Arbeitsplatte wird eine zusätzliche Gewichtskraft auf das Verstellteil ausgeübt, die zu einer maximalen Längenänderung, beispielsweise durch ein vollständiges Ein- oder Ausfedern eines weiteren Federelements führt. Diese Längenänderung bestimmt im wesentlichen die gesamte Längenänderung des Verstellteils. Die Arbeitsplatte wird um diese Längenänderung, die der Höhe des abgelegten Gegenstandes entspricht, in Richtung Boden abgesenkt. Die Höhe der Oberkante aller abgelegten Gegenstände über dem Boden bleibt so im wesentlichen vor und nach dem Ablegen des Gegenstandes konstant.

Ein ablegbarer Gegenstand kann aus einer Anzahl von gleichartigen Teilgegenständen bestehen, die nebeneinander und/oder übereinander in Lagen auf der Arbeitsplattform abgelegt werden können. Die Höhenregulierung der Arbeitsplatte kann in Stufen mit einer Höhe erfolgen, die im wesentlichen der Gesamthöhe der Teilgegenstände entspricht, aus denen ein ablegbarer Gegenstand besteht. Beispielsweise können zwei gleichartige Teilgegenstände mit gleicher Höhe nebeneinander auf der Arbeitsplatte abgelegt werden. Nach Ablage des zweiten Teilgegenstands kann ein entsprechendes Federelement vollständig ein- oder ausfedern und die Höhe der Arbeitsplatte über dem Boden entsprechend der Höhe der Teilgegenstände absenken, um die Arbeitshöhe konstant zu halten. Auch kann ein ablegbarer Gegenstand beispielsweise aus vier gleichartigen kleineren Teilgegenständen bestehen, wobei zwei nebeneinander in jeweils zwei Lagen auf der Arbeitsplatte abgelegt werden können. Bei Wegnahme des ersten, zweiten oder dritten Teilgegenstandes von der Arbeitsplatte kann ein partielles Aus- oder Einfedern der Federelement und eine damit verbundene Höhenänderung der Arbeitsplatte erfolgen. Nach Abnahme des vierten Teilgegenstands kann ein entsprechendes Federelement vollständig ein- oder ausfedern und so seine maximale Längenänderung erfahren und die Arbeitshöhe wird auf den vorbestimmten Wert reguliert. Durch die Zusammenfassung von Teilgegenständen kann die Anzahl der Stufen für die Höhenregulierung der Arbeitsplatte verringert werden, was zu einem vereinfachten Aufbau der Erfindung mit verringerten Kosten führt. Die genaue Arbeitshöhe verändert sich beim Ablegen oder Wegnehmen von Teilgegenständen geringfügig, bis die Anzahl von Teilgegenständen, die einem ablegbaren Gegenstand entspricht, erreicht ist und die Arbeitshöhe wieder ihren vorbestimmten Wert erreicht. Die eben geschilderte Ausführungsform ist besonders zweckmäßig für kleinere Teilgegenstände, von denen sehr viele auf der Arbeitsplatte gelagert werden sollen und wobei die genaue Einhaltung der Arbeitshöhe nicht erforderlich ist. Ein ungefähres Einhalten der Arbeitshöhe in einem ergonomisch günstigen Bereich ist ausreichend. Auch können gleichartige Behälter, insbesondere Körbe, Schachteln und Kästen, nebeneinander auf einer größeren Arbeitsplatte abgelegt werden und einen ablegbaren Gegenstand bilden.

Die Arbeitsplatte oder Arbeitsplattform kann eine im wesentlichen horizontale Platte mit oder ohne Ränder sein, auf der die ablegbaren Gegenstände übereinandergestapelt werden können. Die Form der Arbeitsplatte ist beliebig, insbesondere sind rechteckige oder runde Platten möglich.

Ein Verstellteil kann mehrere teleskopartig einschiebbare Hohlprofile aufweisen. In dem Inneren der teleskopartig einschiebbaren Hohlprofile kann sich eine Anordnung von Federelementen befinden. Das einschiebbare Hohlprofil kann der mechanischen Stabilisierung des Verstellteils und der Führung und dem Schutz der Federelemente dienen. Die Hohlprofile können rechteckig oder rund ausgeführt sein.

Die einschiebbaren Hohlprofile können mit Lagern, insbesondere Rollen- oder Walzenlager, geführt werden. Die Lager können an einem der Hohlprofile fest angeordnet sein und an einem anderen Hohlprofil beweglich anliegen. Die Lager können der Stabilisierung und/oder der Führung der zueinander beweglichen Hohlprofile dienen. Beispielsweise können vier Walzenlager zur Führung eines rechteckigen inneren Hohlprofils in einer bestimmten Höhe des Verstellteils so angeordnet sein, daß jeweils eine Walze an einer Seitenfläche des rechteckigen inneren Hohlprofils anliegt. Es sind auch mehrere Lagen von Lagern in verschiedenen Höhen des Verstellteils möglich, durch die ein auf das Verstellteil aufgebrachtes Moment übertragen werden kann.

Die Arbeitsplatte kann mit einem Abstand von dem oberen Ende eines vertikalen Verstellteils angebracht werden. Das Anbringen der Arbeitsplatte an dem vertikalen Verstellteil kann beispielsweise mittig erfolgen. Das obere Teil des vertikalen Verstellteils kann über die Arbeitsplatte hinausragen. Beispielsweise kann das vertikale Verstellteil am Rand der Arbeitsplatte angebracht werden. Der über die Arbeitsplatte hinausragende Teil des vertikalen Verstellteils kann zur Aufnahme der Restlängen der vollständig eingefederten Federelemente dienen, wenn die horizontale Arbeitsplatte bei maximaler Belastung vollständig abgesenkt wird. Eine solche Anordnung ermöglicht einen großen Verstellbereich der Höhe der Arbeitsplatte über dem Boden.

Das Grundgestell kann aus mehreren Teilen bestehen, die jeweils in die Verstellteile integriert sind. Die Verstellteile können auf dem Boden aufstehen. Durch eine Anordnung einer rechteckigen Arbeitsplatte und von vier auf der Unterseite der Arbeitsplatte angebrachten Verstellteilen kann eine tischähnliche höhenregulierte Arbeitsplatte ausgebildet werden. Jedes Verstellteil kann die erfindungsgemäßen Federelemente aufweisen. Eine solche Anordnung kann gute Stabilitätseigenschaften aufweisen.

Die Federelemente der erfindungsgemäßen Arbeitsplatte können Torsionsfedern, Blattfedern, Spiralfedern und/oder Gasfedern aufweisen, die auf Druck, Zug oder Biegung belastet werden können. Es sind viele Ausführungsformen mit oder ohne Kraftumlenkung und unterschiedliche Anordnungen der Federelemente denkbar. Auch können elastische Bänder, insbesondere Gummibänder oder ähnliches, die ihre Länge in Abhängigkeit von der aufgebrachten Kraft ändern, als Federelemente verwendet werden. Vorzugsweise können die Federelemente als Gasfedern ausgebildet werden. Gasfedern weisen gute Dämpfungseigenschaften auf und schwingen nicht nach.

Eine besondere Ausgestaltung der Erfindung sieht vor, daß die erfindungsgemäße höhenregulierte Arbeitsplatte fahrbar ist und beispielsweise das Grundgestell Rollen oder Räder aufweist. Dies ermöglicht einen einfachen Transport der abgelegten Gegenstände und ist besonders vorteilhaft für die Verwendung in einem Lager oder Aktenarchiv. Die abgelegten Gegenstände können leicht ergriffen und/oder weggenommen werden und neue Gegenstände können abgelegt werden, ohne daß die mit den Arbeiten betraute Person sich bücken oder strecken muß.

Ein länglicher Griff kann der Länge nach vertikal an einem Verstellteil angebracht werden. Der längliche Griff kann beispielsweise in Form eines Rohrs, das vertikal angeordnet ist, ausgeführt werden. Er kann der Führung einer fahrbaren höhenregulierten Arbeitsplatte durch eine Betriebsperson dienen Der längliche Griff gestattet ein einfaches Greifen in einer ergonomisch günstigen Greifhöhe, bei verschiedenen Längen bzw. Höhen des vertikalen Verstellteils infolge der Höhenregulierung der Arbeitsplatte.

Eine erfindungsgemäße Vorrichtung zur Aufnahme von Gegenständen, insbesondere mit im wesentlichen gleichen Abmessungen und gleichem Gewicht, kann vorteilhafterweise eine Arbeitsplatte, ein auf dem Boden aufstehendes Grundgestell und mindestens ein vertikales Verstellteil zur Höhenregulierung der Arbeitsplatte, das die Arbeitsplatte und das Grundgestell miteinander verbindet und eine Reihenanordnung einer vorbestimmten Anzahl von elastischen Elementen aufweist, umfassen, wobei unterschiedliche Richtgrößen bzw. Federkonstanten der einzelnen elastischen Elemente vorgesehen sind, so daß die Höhenregulierung der Arbeitsplatte durch nahezu vollständiges ein- bzw. ausfedern der einzelnen elastischen Elemente in Stufen mit einer Höhe erfolgt, die im wesentlichen einer Höhe der ablegbaren Gegenstände entspricht, um eine im wesentlichen konstante Höhe einer Oberkante der auf der Arbeitsplatte abgelegten Gegenstände zu erzielen.

Die erfindungsgemäße höhenregulierte Arbeitsplatte kann vorteilhafterweise zur Ablage und zum Transport von Kästen, in denen sich weitere Gegenstände, beispielsweise Briefe, Postkarten und/oder Päckchen, befinden, verwendet werden. Die vorliegende Erfindung gestattet eine einfache und ergonomische Handhabung der Behältnisse und der darin enthaltenen Gegenstände.

Ein Verfahren zur Höhenregulierung von Arbeitsplatten, die der Ablage von Gegenständen, insbesondere mit im wesentlichen gleichen Abmessungen und gleichem Gewicht, dienen, wobei eine Höhe H, die der Höhe der Oberkante der unbeladenen Arbeitsplatte über dem Boden und der Höhe der Oberkante aller abgelegten Gegenstände über dem Boden entspricht, im wesentlichen unabhängig von der Anzahl der auf der Arbeitsplatte abgelegten Gegenstände ist und die Höhenregulierung der Arbeitsplatte in Stufen mit einer Höhe erfolgt, die im wesentlichen der Höhe der ablegbaren Gegenstände entspricht.

Die folgende Beschreibung von Ausführungsbeispielen wird anhand von beigefügten schematischen Figuren vorgenommen. Es zeigen:
Fig. 1 eine erste schematische Darstellung der erfindungsgemäßen höhenregulierten Arbeitsplattform;
Fig. 2 eine weitere schematische Darstellung der erfindungsgemäßen höhenregulierten Arbeitsplattform zur Ablage von gleichartigen Teilgegenständen;
Fig. 3 eine Seitenansicht einer fahrbaren erfindungsgemäßen höhenregulierten Arbeitsplatte;
Fig. 4 eine Frontansicht der fahrbaren höhenregulierten Arbeitsplatte;
Fig. 5 einen Schnitt durch das Verstellteil der fahrbaren höhenregulierten Arbeitsplatte;
Fig. 6 eine Seitenansicht eines erfindungsgemäßen Hubrollers mit höhenregulierter Arbeitsplatte;
Fig. 7 eine Frontansicht eines erfindungsgemäßen Hubrollers; und
Fig. 8 einen Schnitt A - A durch das Verstellteil eines erfindungsgemäßen Hubrollers.

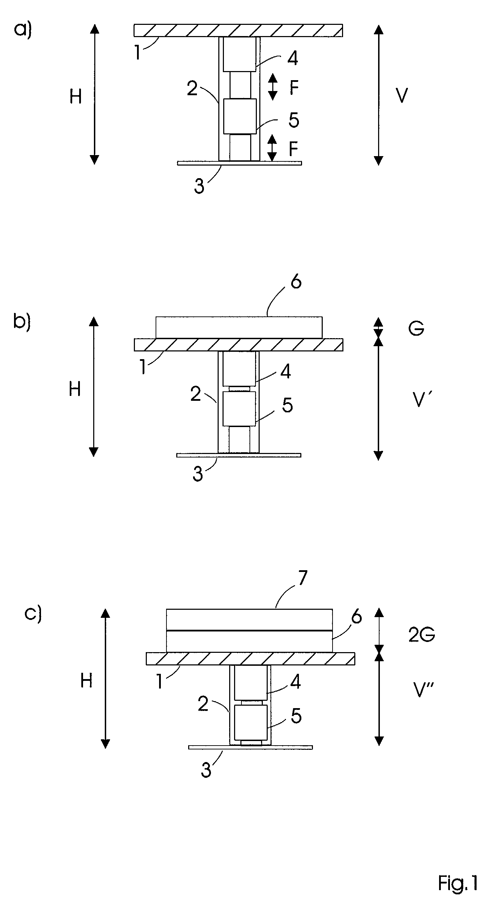

Die Fig. 1 zeigt schematisch eine Ausführungsform der erfindungsgemäßen höhenregulierten Arbeitsplatte zur Ablage von insbesondere gleichartigen Gegenständen.

Fig. 1a zeigt eine unbelastete Arbeitsplatte 1, ein vertikales Verstellteil zur Höhenregulierung 2 und ein auf dem Boden aufstehendes Grundgestell 3. In diesem Ausführungsbeispiel enthält das Verstellteil 2 zwei in Reihe angeordnete Federelemente 4 und 5. Der maximale Federweg dieser beispielsweise auf Druck belasteten Federelemente 4,5, d.h. die maximale Längenänderung eines einzelnen Federelements, beträgt F. Die Höhe der unbeladenen Arbeitsplatte über dem Boden wird mit V und die Arbeitshöhe mit H bezeichnet. Im unbeladenen Zustand gilt: H=V.

Fig. 1b zeigt den Zustand dieser erfindungsgemäßen Ausführungsform nach der Ablage von einem Gegenstand 6 auf der Arbeitsplatte 1. Die Höhe des abgelegten Gegenstandes 6 beträgt G und entspricht erfindungsgemäß der maximalen Längenänderung F eines Federelements (maximaler Federweg). Durch die zusätzliche Gewichtskraft des abgelegten Gegenstandes 6 federt beispielsweise das oberste der beiden Federelemente 4, 5 vollständig ein und verringert seine Länge um die maximale Längenänderung F. Die Arbeitshöhe, die Höhe der Oberkante aller abgelegten Gegenstände über dem Boden, ergibt sich aus der Höhe der beladenen Arbeitsplatte V' zusammen mit der Höhe G des abgelegten Gegenstandes 6. Die Höhe der Oberkante der beladenen Arbeitsplattform V' wird durch die zusätzliche Gewichtskraft des Gegenstandes 6 um F verringert, d.h. V' = V - F. Die Arbeitshöhe der beladenen Arbeitsplatte ergibt sich zu H = V' + G = V - F + G = V und somit bleibt die Arbeitshöhe nach der Ablage eines Gegenstandes konstant.

Die Fig. 1c zeigt den Zustand nach Ablage von zwei Gegenständen 6, 7 mit im wesentlichen gleichen Abmessungen und gleichem Gewicht. Das zweite Federelement 5 federt durch die zusätzliche Gewichtskraft des zweiten abgelegten Gegenstandes 7 ebenfalls vollständig ein, wodurch die Höhe V'der beladenen Arbeitsplatte um 2 F abgesenkt wird. Die Arbeitshöhe, nun die Höhe der Oberkante des zweiten abgelegten Gegenstandes 7 über dem Boden, beträgt weiterhin: H = V' + 2 · G = V - 2 · F + 2 · G = V.

Die Richtgrößen oder Federkonstanten der Federelemente für dieses Ausführungsbeispiel sind derart auszulegen, daß eine auf die Federelemente wirkende Kraft, die der Gewichtskraft der Arbeitsplatte und eines ablegbaren Gegenstandes entspricht, zu einer maximalen Längenänderung F des Federelements 4 führt, d.h. das Federelement 4 federt bei Belastung mit dieser Kraft vollständig ein oder aus, während das Federelement 5 nur eine kleine Längenänderung erfährt. Eine auf die Federelemente wirkende Kraft, die der Gewichtskraft der Arbeitsplatte um zwei aufgelegte Gegenstände entspricht, führt zu einer maximalen Längenänderung des Federelements 5, d.h. das Federelement 5 federt vollständig ein oder aus. Dieses Schema zur Auslegung der Richtgrößen oder Federkonstanten der einzelnen Federelemente kann selbstverständlich beliebig erweitert werden. Die Anzahl der Federelemente entspricht der Anzahl der Stufen der Höhenregulierung und der maximalen Anzahl der ablegbaren Gegenstände für die die Arbeitshöhe im wesentlichen konstant ist.

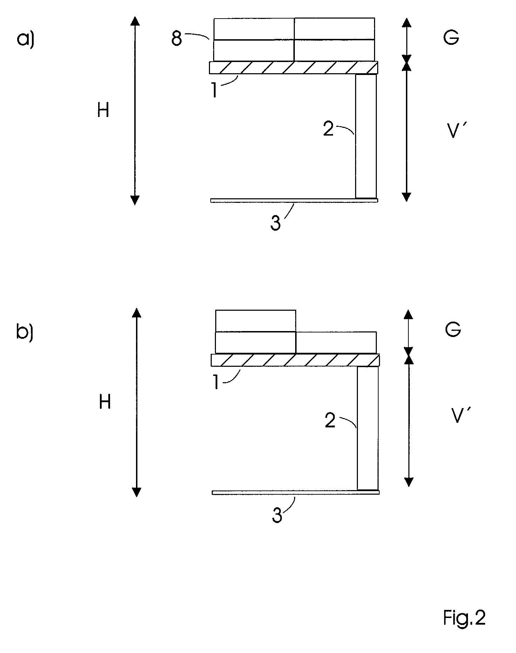

Die Fig. 2 zeigt eine schematische Darstellung einer weiteren Ausführungsform der vorliegenden Erfindung.

In Fig. 2a wird ein vertikales Verstellteil 2 gezeigt, das am Rand unterhalb der Arbeitsplatte 1 angeordnet ist und diese mit dem Grundgestell 3 verbindet. Das Verstellteil 2 weist ein teleskopartiges einschiebbares Hohlprofil und mehrere, nicht gezeigte, in Reihe angeordnete Federelemente auf. Ein ablegbarer Gegenstand 8 besteht aus vier gleichartigen Teilgegenständen, von denen jeweils zwei nebeneinander in zwei Lagen auf der Arbeitsplatte 1 abgelegt sind. Die Teilgegenstände weisen im wesentlichen gleiche Abmessungen und gleiches Gewicht auf und bilden zusammen einen ablegbaren Gegenstand 8 mit einer Höhe G. Die Zusammenfassung der gleichartigen Teilgegenstände zu einem einzigen ablegbaren Gegenstand kann erfolgen, um die Anzahl der benötigen Federelemente für die Höhenregulierung zu reduzieren. Ist eine genaue Einhaltung der Arbeitshöhe H nicht erforderlich und können geringe Schwankungen hingenommen werden, kann eine Höhenregulierung der Arbeitsplatte mit einer verringerten Anzahl von Stufen erfolgen. Die Höhe der Stufen entspricht dann im wesentlichen der Gesamthöhe G der Teilgegenstände aus denen ein ablegbarer Gegenstand besteht.

Wird in dem in Fig. 2b gezeigten Beispiel ein Teilgegenstand von der Arbeitsplatte 1 abgenommen, so verringert sich die auf die Federelemente wirkende Kraft um die Gewichtskraft eines Teilgegenstandes und es erfolgt eine geringe Längenänderung der Federelemente, um die sich die Höhe V' der beladenen Arbeitsplatte verändert. Dies führt zu einer geringfügigen Änderung der Arbeitshöhe H', die jedoch meist hingenommen werden kann ist.

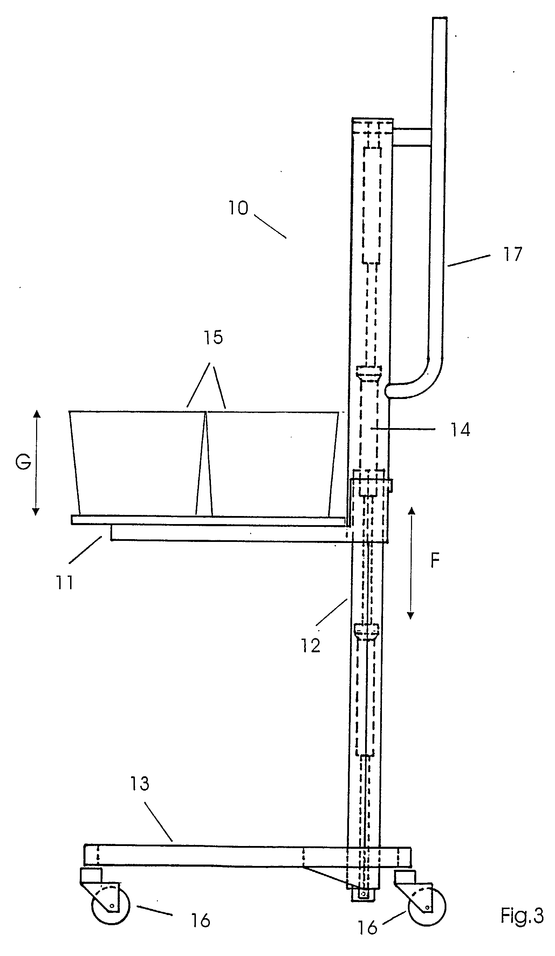

Die Fig. 3 zeigt eine Seitenansicht einer fahrbaren Ausführungsform der vorliegenden Erfindung mit am Grundgestell 13 befestigten Rädern oder Rollen 16. Diese fahrbare höhenregulierte Arbeitsplatte, im weiteren als Hubroller 10 bezeichnet, weist ein vertikales Verstellteil 12 zur Höhenregulierung der Arbeitsplatte 11 auf. Das vertikale Verstellteil 12 besitzt in diesem Beispiel drei fest miteinander verbundene und übereinander angeordnete Gasfedern 14, die in einem teleskopartigen einschiebbaren Hohlprofil angeordnet sind. Die Gasfedern sind in Reihe angeordnet, d.h. ein Ende einer Gasfeder ist wechselseitig mit einem anderen Ende einer anderen Gasfeder beispielsweise durch Verschrauben verbunden.

In dieser Ausführungsform werden die Gasfedern durch die Gewichtskraft der abgelegten Gegenstände auf Druck belastet wodurch ihre Länge verkürzt wird, d.h. sie federn ein. Der maximale Federweg F jeder der Gasfedern 14 entspricht in etwa der Höhe G der ablegbaren Gegenstände 15. Die Federkonstanten oder Richtgrößen der Gasfedern entsprechen den erfindungsgemäßen Auslegungsvorschriften. Die Verwendung von Gasfedern als Federelemente ist besonders vorteilhaft, da durch deren Dämpfung beim Ein- und Ausfedern keine Schwingungen auftreten und die Arbeitsplatte schnell die endgültige Höhenlage erreicht.

Der erfindungsgemäße Hubroller 10 kann beispielsweise für die Ablage und den Transport von Behältern 15 verwendet werden, in denen sich weitere kleinere Gegenstände befinden können. Durch die Verwendung des Hubrollers 10 wird die Arbeitshöhe reguliert und der Zugriff auf diese Gegenstände kann immer in einer ergonomisch günstigen Höhe über dem Boden erfolgen. Dies ist besonders vorteilhaft bei der Verwendung in einem Lager oder einer Poststelle, wo beispielsweise Kleinteile, Briefe oder Päckchen verteilt und/oder sortiert werden müssen.

In dem vorliegenden Beispiel ist die Arbeitsplatte 11 zur Aufnahme von zwei Behältern 15 ausgelegt, die nebeneinander abgelegt werden können. Jeweils zwei der nebeneinander angeordneten Behälter 15 bilden einen ablegbaren Gegenstand im Sinne der Höhenregulierung. Das vorliegende Ausführungsbeispiel weist drei Stufen für drei Lagen von jeweils zwei Behältern auf. Insgesamt lassen sich so sechs Behälter auf dem erfindungsgemäßen Hubroller 10 ablegen, wobei der Zugriff auf den Inhalt der Behälter 15 in einer konstanten Arbeitshöhe erfolgt.

Bei dem in Fig. 3 gezeigten Hubroller ist die horizontale Arbeitsplatte 11 ungefähr in der Mitte des vertikalen Verstellteils 12 angebracht. Dies ermöglicht ein Absenken der Arbeitsplatte 11 bis auf das Grundgestell 13 durch ein vollständiges Einfedern der Gasfedern 14. Das eingeschobene teleskopartige Hohlprofil des Verstellteils 12 nimmt dann die Restlängen der vollständig eingefederten Gasfedern 14 auf.

Der Griff 17 zum Führen des Hubrollers durch eine Bedienperson ist vertikal entlang des oberen Abschnitts des Verstellteils 12 angebracht. Dadurch wird gewährleistet, daß der Griff 17 in jedem Zustand - unbelastet, teilweise oder vollständig belastet und eingefedert - des Hubrollers 10 einfach zu erreichen ist. Durch die vertikale längliche Ausgestaltung des Griffs 17 befindet sich ein Teil des Griffs immer in einer günstigen Greifhöhe für die Bedienperson.

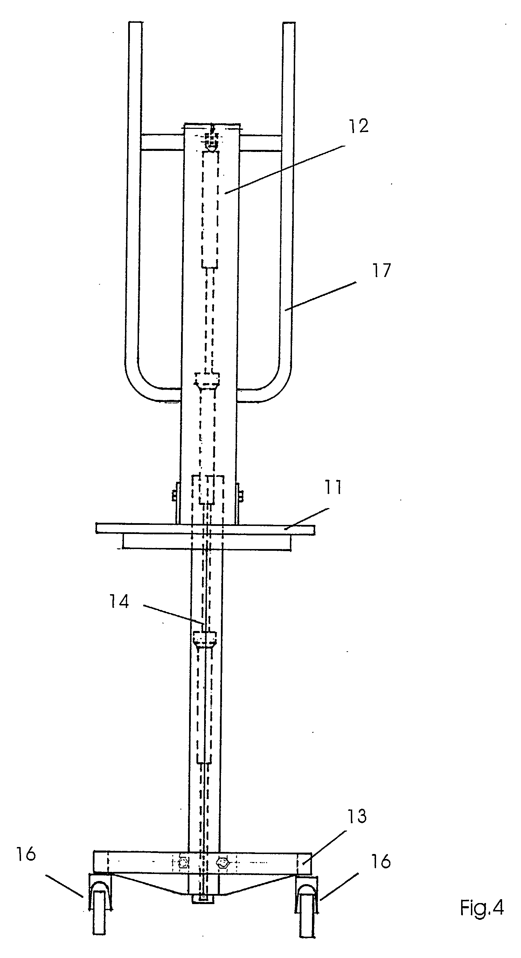

Die Fig. 4 zeigt eine Frontalansicht der letzten Ausführungsform des erfindungsgemäßen Hubrollers 10. Deutlich ist das Grundgestell 13 mit den Rollen 16, das vertikale Verstellteil 12 und die Arbeitsplatte 11 zu erkennen. Weiterhin werden die drei Gasfedern 14 und der am vertikalen Verstellteil 12 angebrachte Griff 17 gezeigt.

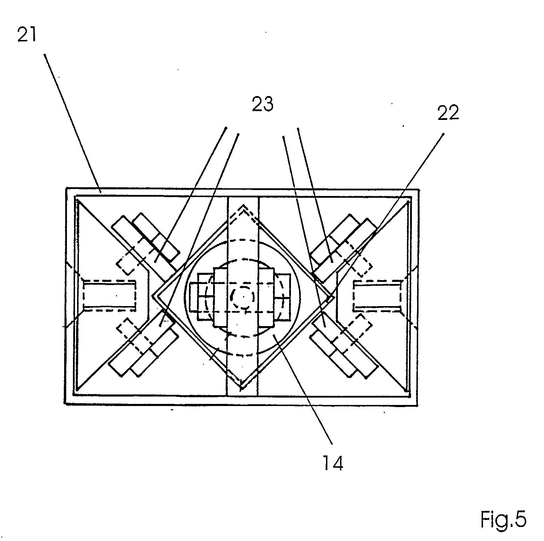

Die Fig. 5 zeigt einen Schnitt durch das obere Teil des Verstellteil 12 des Hubrollers 10. Das Verstellteil 12 weist zwei rechteckige Hohlprofile 21,22 und vier Lager 23 auf. Die einschiebbaren Hohlprofile 21, 22 werden in diesem Ausführungsbeispiel mit den Rollen- oder Walzenlager 23 geführt. Die Lager 23 sind an dem äußeren Hohlprofil 21 in einer bestimmten Höhe fest angeordnet und liegen an den Seitenflächen des inneren Hohlprofil 22 beweglich an. Eine zweite gleichartige Anordnung mit vier weiteren Lagern ist in einer anderen Höhe des Verstellteils 12 angeordnet, um das auf das Verstellteil 12 aufgebrachtes Moment aufzunehmen. Weiterhin werden die in dem inneren Hohlprofil 22 angeordneten Gasfedern 14 gezeigt.

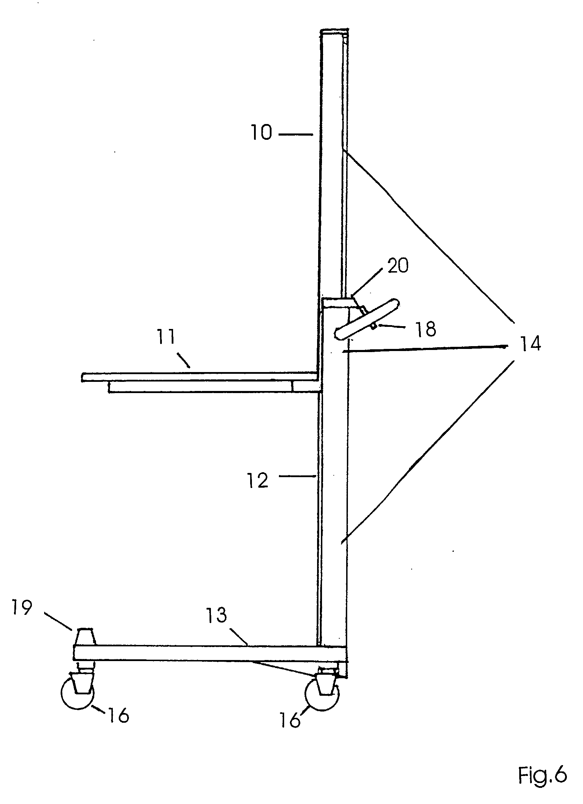

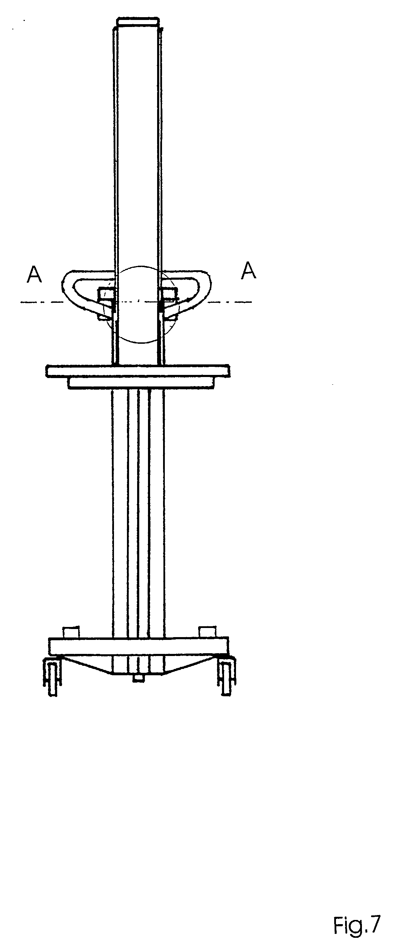

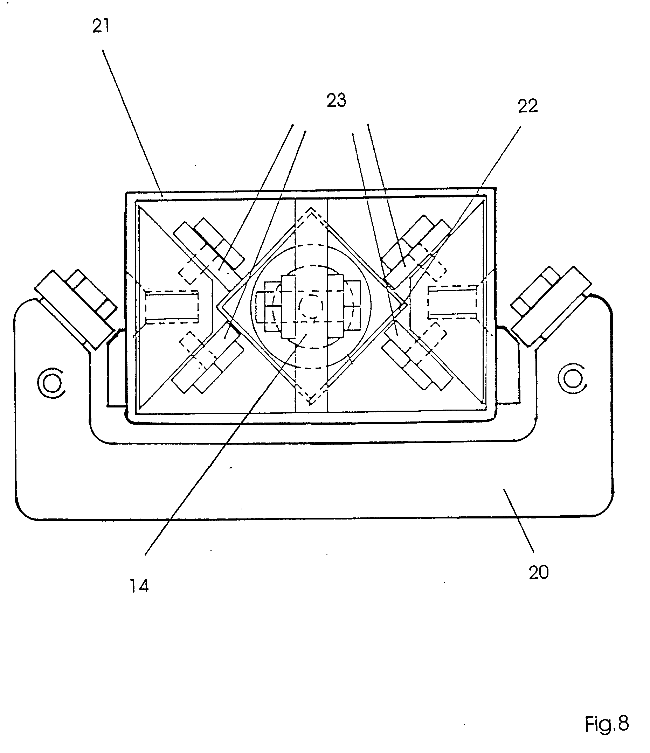

Die Fig. 6,7 und 8 zeigen ein weiteres Ausführungsbeispiel eines erfindungsgemäßen Hubrollers mit höhenregulierter Arbeitsplatte, bei dem ein horizontaler Griff 18 zum Führen des Hubrollers 10 am Verstellteil 12 angebracht ist. Durch den horizontalen Griff 18 mit fester Höhe wird die Bedienung wesentlich erleichtert und ein ergonomisches Arbeiten begünstigt. Der Griff 18 ist im Gegensatz zu dem vorherigen Ausführungsbeispiel am Führungsrohr des Vertstellteils 12 angebracht. Die Gasfedern 14 befinden sich wie vorher im Verstellteil 12, sind aber in Fig. 6 und 7 nicht gezeigt. Zusätzlich weist dieses Ausführungsbeispiel eine obere Führung 20 für das Hubrohr des Vertstellteils 12 auf, das mit seitlichen Führungschienen versehen ist. Das Aufsetzen einer voll belasteten Arbeitsplatte 11 auf das Grundgestell 13 wird durch Gummipuffer 19 gedämpft.

Die Dimensionierung der Gasfedern 14 erfolgt gemäß der erfindungsgemäßen Auslegungsregel, nach der die maximale Kraft der n-ten Feder, d.h. die Kraft die für die n-te Feder zu einer maximalen Längenänderung führt, sich aus der

Gewichtskraft der Arbeitsplatte + n * Gewichtskraft eines ablegbaren Gegenstands ergibt. Bei beispielsweise einer Gewichtskraft der Arbeitsplatte von 100N und einer Gewichtskraft eines Gegenstandes von 150N ergibt sich eine maximale Kraft für die 1. Feder von 250N, für die 2. Feder von 400N usw. Selbstverständlich kann auch die Gewichtskraft einer Behälterlage als gesamte Gewichtskraft von Teilgegenständen für eine Stufe zur Auslegung der Federn herangezogen werden.

Die gezeigten Hubroller der Ausführungsbeispiele stellen nur einige mögliche Ausgestaltungen der erfindungsgemäßen höhenregulierten Arbeitsplatte dar. Weitere Ausführungsformen mit und ohne Räder oder Rollen, mit einem oder mehreren vertikalen Verstellteilen oder mit einem in die Verstellteile integrierten Grundgestell sind selbstverständlich möglich und für den Fachmann ohne weiteres ersichtlich.

## Patentansprüche

1. Vorrichtung zur Aufnahme von Gegenständen, insbesondere mit im wesentlichen gleichen Abmessungen und gleichem Gewicht, mit
- einer Arbeitsplatte (1;11),
- einem auf dem Boden aufstehenden Grundgestell (3;13) und
- mindestens einem vertikalen Verstellteil (2;12) zur Höhenregulierung der Arbeitsplatte (1;11), das die Arbeitsplatte (1;11) und das Grundgestell (3;13) miteinander verbindet,
**dadurch gekennzeichnet, daß**
eine Höhe H einer Oberkante von auf der Arbeitsplatte (1;11) abgelegten Gegenständen (6,7;15) im wesentlichen unabhängig von einer Anzahl der auf der Arbeitsplatte (1;11) abgelegten Gegenstände (6,7;15) ist, wobei die Höhenregulierung der Arbeitsplatte (1,11) in Stufen mit einer Höhe erfolgt, die im wesentlichen einer Höhe G der ablegbaren Gegenstände (6,7;15) entspricht.

2. Vorrichtung nach Anspruch 1, wobei ein Verstellteil (2;12) eine Anordnung einer Anzahl von Federelementen (4,5;14) in Reihe aufweist, die durch ihre Längenänderung eine Höhe des Verstellteils (2;12) verändern,
die Anzahl der Federelemente (4,5;14) der Anzahl der Stufen der Höhenregulierung entspricht und/oder
die in Reihe angeordneten Federelemente (4,5;14) jeweils eine unterschiedliche Richtgröße oder Federkonstante aufweisen.

3. Vorrichtung nach Anspruch 2, wobei eine maximale Längenänderung F der einzelnen Federelemente (4,5;14) im wesentlichen der Höhe G eines der ablegbaren Gegenstände (6,7;15) entsprechen.

4. Vorrichtung nach einem der Ansprüche 2 oder 3, wobei die Richtgrößen oder Federkonstanten der einzelnen Federelemente (4,5;14) so ausgelegt sind, daß bei Ablage von jeweils einem Gegenstand (6,7;15) ein Federelement (4,5;14) eine maximale Längenänderung F und bei Ablage von jeweils einem weiteren Gegenstand (6,7;15) zusätzlich ein anderes Federelement (4,5;14) eine maximale Längenänderung F erfährt.

5. Vorrichtung nach zumindest einem der vorangehenden Ansprüche, wobei ein ablegbarer Gegenstand (8) aus einer Anzahl von gleichartigen Teilgegenständen besteht, die nebeneinander und/oder übereinander in Lagen auf der Arbeitsplatte (1;11) abgelegt werden können, und
die Höhenregulierung der Arbeitsplatte (1;11) in Stufen mit einer Höhe erfolgt, die im wesentlichen einer Gesamthöhe G der Teilgegenstände entspricht aus denen ein ablegbarer Gegenstand (8) besteht.

6. Vorrichtung nach zumindest einem der vorangehenden Ansprüche, wobei ein Verstellteil (2;12) mehrere teleskopartig einschiebbare Hohlprofile aufweist, die mit Lagern, insbesondere Rollen- oder Walzenlager, geführt werden.

7. Vorrichtung nach zumindest einem der vorangehenden Ansprüche, wobei die Arbeitsplatte (1;11) mit einem bestimmten Abstand von einem oberen Ende eines vertikalen Verstellteils (2;12) an diesem angebracht ist.

8. Vorrichtung nach zumindest einem der vorangehenden Ansprüche, wobei die Federelemente (4,5;14) Torsionsfedern, Blattfedern, Spiralfedern elastische Bänder und/oder Gasfedern aufweisen, die auf Druck, Zug oder Biegung belastet werden.

9. Vorrichtung nach zumindest einem der vorangehenden Ansprüche, wobei das Grundgestell (13) fahrbar ist und insbesondere Rollen oder Räder (16) aufweist.

10. Verwendung der Vorrichtung nach einem der vorangehenden Ansprüche zur Ablage von Behältern, in denen sich weitere Gegenstände, insbesondere Briefe, Postkarten und/oder Päckchen, befinden.
